**Europäisches Patentamt**

**European Patent Office**

**Office européen des brevets**

(19)

(11) Veröffentlichungsnummer: **0 006 239**
**B1**

(12) **EUROPÄISCHE PATENTSCHRIFT**

(45) Veröffentlichungstag der Patentschrift:
**20.01.82**

(51) Int. Cl.³: **F 16 N 7/38**, B 60 R 17/02

(21) Anmeldenummer: **79102002.7**

(22) Anmeldetag: **18.06.79**

(54) **Mehrfachkupplung für Schmiersysteme.**

(30) Priorität: **21.06.78 DE 2827137**

(43) Veröffentlichungstag der Anmeldung:
**09.01.80 Patentblatt 80/1**

(45) Bekanntmachung des Hinweises auf die Patenterteilung:
**20.01.82 Patentblatt 82/3**

(84) Benannte Vertragsstaaten:
**AT BE CH FR GB IT LU NL SE**

(56) Entgegenhaltungen:
**DE-A-2 059 576**
**DE-U-1 937 544**
**DE-U-7 230 420**
**US-A-3 918 485**

(73) Patentinhaber: **Lincoln-Helios GmbH, Lenaustrasse 14,**
**D-6900 Heidelberg (DE)**

(72) Erfinder: **Rodemer, Karl, Parkstrasse 17,**
**D-6900 Heidelberg (DE)**

(74) Vertreter: **Keil, Rainer, Dipl.-Phys. et al, Patentanwälte**
**MERTENS & KEIL Ammelburgstrasse 34,**
**D-6000 Frankfurt am Main (DE)**

ACTORUM AG.

«Mehrfachkupplung für Schmiersysteme»

Die Erfindung betrifft eine Mehrfachkupplung nach dem Gattungsbegriff des Anspruchs 1.

Bei Kraftfahrzeugen, insbesondere Lastkraftzügen mit Anhänger werden von einer Versorgungspumpe aus, die sich üblicherweise am Motorwagen befindet, alle Schmierstellen sowohl am Motorwagen als auch am Anhänger mit Schmiermittel versorgt. Wird zu diesem Zweck ein übliches Progressivschmiermittelsystem mit hintereinander geschalteten Verteilern bzw. Verteilerkolben eingesetzt, so werden Schmierleitungsübergänge vom Motorwagen zum Anhänger in einer Anzahl benötigt, die der Anzahl der Schmiermittelverteiler am Anhänger entspricht. Beim Progressivschmiermittelsystem wird der Schmiermitteldurchfluss aller Leitungen blockiert, falls eine Schmiermittelleitung gesperrt ist. Je nach Bauart enthält der Anhänger derzeit ein, zwei oder mehr Schmierstoffverteiler.

Aus der DE-U 7 230 420 ist eine Mehrfachkupplung für druckmittelführende Leitung der gattungsgemässen Art bekannt. Diese hat jedoch eine festliegende Anzahl von Durchgängen in der Steckdose und dem Einsteckstück, wobei immer alle Durchgänge der Steckdose geschlossen oder immer alle geöffnet sind.

Aufgabe der vorliegenden Erfindung ist es, eine Mehrfachkupplung der gattungsgemässen Art zu schaffen, welche für das Anschliessen von Anhängern unterschiedlicher Schmierstellenzahl im Anhänger verwendbar ist, d.h. das Anschliessen von Anhängern unterschiedlicher Schmierstellenzahl an den gleichen Motorwagen gestattet.

Diese Aufgabe wird nach der Erfindung mit den kennzeichnenden Merkmalen des Anspruchs 1 gelöst. Das Lösungsprinzip besteht darin, dass die Mehrfachkupplung nur immer gerade so viele Schmiermitteldurchlässe öffnet, wie Schmierstellen oder Schmierstoffverteiler im Anhänger vorhanden sind, während das Schmiermittel der gesperrten Kupplungsdurchgänge zu der Versorgungspumpe zurückgeführt wird. Hat man also beispielsweise eine Mehrfachkupplung mit drei möglichen Durchgängen, hat der Anhänger aber nur zwei zu versorgende Schmierstellen oder Schmierstoffverteiler, so wird ein Durchgang mit der nach der Erfindung vorgesehenen Ventileinrichtung gesperrt und diese an den Rücklauf zu der Versorgungspumpe gekoppelt. Entsprechend wird mit zwei Durchgängen verfahren, wenn ein Anhänger mit beispielsweise nur einer Schmierstelle oder einem Schmierstoffverteiler an den Motorwagen mit einer Mehrfachkupplung, die drei mögliche Durchgänge aufweist, angeschlossen werden soll.

Eine konstruktiv besonders einfache Ausgestaltung der Ventileinrichtung ist nach Anspruch 2 vorgesehen. Diese gewährleistet bei sicherer Funktion, dass entweder ein Durchfluss zu der oder den Schmierstelle(n) bzw. dem oder den Schmierstoffverteiler(n) im Anhänger oder ein Rückfluss des Schmiermittels zur Versorgungspumpe möglich ist.

Anspruch 3 beinhaltet eine vorteilhafte Weiterbildung des im Anspruch 2 enthaltenen Konstruktionsgedankens.

Die Lösungsalternative nach Anspruch 4 hat den Vorteil des einfachen Einbaus der Ventilanordnung in die Steckdose.

Nach Anspruch 5 ist auf einfache Weise die Auswahl der offenen oder geschlossenen Verbindungsleitungen durch Einsetzen bzw. Herausnehmen entsprechender Auslösestifte in das Einsteckstück, welches einem Anhänger mit einer entsprechenden Anzahl von Schmierstellen zuzuordnen ist, möglich.

Damit kann ein und dieselbe Mehrfachkupplung durch das Einsetzen ein oder mehrerer Stifte in das Einsteckstück an die entsprechende Anzahl von Schmierstellen oder Schmierstoffverteiler des Anhängers ohne konstruktive Änderungen angepasst werden.

Nach Anspruch 6 ist ein besonders einfaches und zwangsläufiges Einwirken der Auslösestifte auf die Ventileinrichtung in der Steckdose gewährleistet.

Mit Hilfe der Massnahme des Anspruchs 7 werden die Kolben der Doppelkolbenanordnung in der für die Hin- und Herbewegung in der Kammer erforderlichen Ausrichtung gehalten.

Die Massnahme des Anspruchs 8 gewährleistet die verkantungsfreie Führung der Kolbenanordnung in der Kammer und der Kolbenverlängerung in der Verbindungsleitung.

Die nach Anspruch 9 vorgesehenen Hülsen dienen dem festen Einstecken des Einsteckstükkes in die Steckdose und gewährleisten zusätzlich die Halterung der jeweils eingesetzten Auslösestifte sowie die Führung der Kolbenverlängerung.

Die Massnahme des Anspruchs 10 ist getroffen, damit beim Abziehen des Einsteckstückes von der Steckdose das Schmiermittel nicht aus den Schmiermittelleitungen des Anhängers ausfliesst.

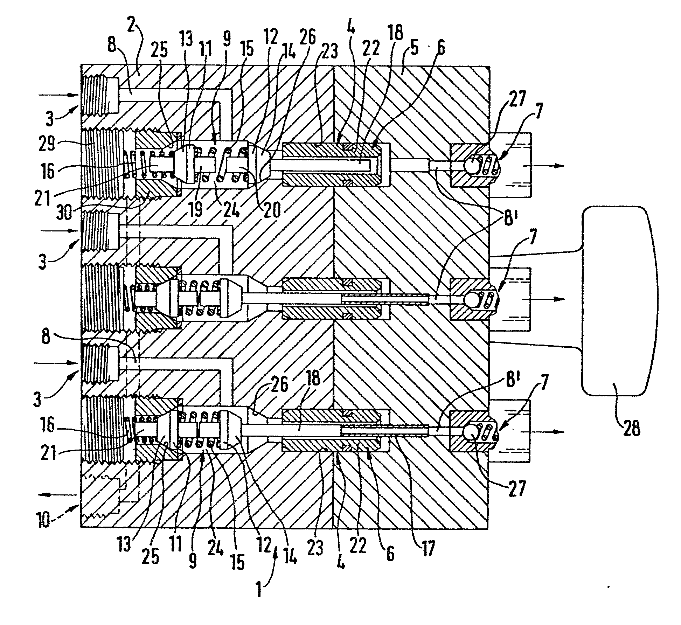

Weitere Merkmale, Vorteile und Anwendungsmöglichkeiten der vorliegenden Erfindung ergeben sich aus der nachfolgenden Beschreibung eines Ausführungsbeispieles anhand der beiliegenden Zeichnung.

Die einzige Figur veranschaulicht im Schnitt eine erfindungsgemässe Mehrfachkupplung mit drei möglichen Durchgängen.

Die erfindungsgemässe Mehrfachkupplung 1 besteht aus einer üblicherweise auf dem Motorwagen, der auch die Schmiermittelpumpe trägt, angeordneten Steckdose 2 und einem dazu passendem Einsteckstück 5, welches üblicherweise dem Anhänger zugeordnet ist. Die Steckdose 2 hat in dem dargestellten Fall, entsprechend der Anzahl der möglichen Durchgänge, drei Eingänge 3, welche über jeweilige Verbindungsleitungen 8 mit Ausgängen 4 der Steckdose 2 in Verbindung stehen. Das Einsteckstück 5 hat seinerseits drei den Steckdosenausgängen 4 entsprechende Eingänge 6, welche über Verbindungsleitungen 8' mit entsprechenden Abgängen 7 des Einsteckstückes 5 in Verbindung stehen. Von den Abgängen 7 führen (nichtdargestellte) Schmiermittelleitungen zu den im Anhänger des Lastkraftzuges vorgesehenen Schmierstellen oder Schmierstoffverteilern in entsprechender Anzahl, also entweder eine, zwei oder drei solcher Schmiermittelleitungen. Die jeweilige Verbindungsleitung 8 der Steckdose 2 führt von den jeweiligen Steckdoseneingängen 3 in jeweils eine axiale, etwa zylindrische Kammer 24, an deren einer dem Einsteckstück 5 abgewandten Endfläche ein Dichtsitz 25 und an deren anderer dem Einsteckstück 5 zugewandten Endfläche ein Dichtsitz 26 für zwei zueinander ausgerichtete mit ihren Dichtflächen 13 und 14 nach aussen weisende Kolben 11 und 12 vorgesehen sind. Die Verbindungsleitung 8 mündet seitlich zwischen den Kolben 11 und 12 in die Kammer 24 und geht von dieser an der dem Einsteckstück 5 zugewandten Endfläche in axialer Richtung wieder ab. Die Kolben 11 und 12 bilden eine Doppelkolbenanordnung einer in der jeweiligen Verbindungsleitung 8, 8' angeordneten Ventileinrichtung 9, die je nach ihrer axialen Endlage entweder den Durchfluss von dem jeweiligen Steckdoseneingang 3 zu dem jeweiligen Einsteckstückabgang 7 verschliesst und gleichzeitig den Durchlass von dem jeweiligen Steckdoseneingang 3 zu einem gemeinsamen Rücklauf 10 öffnet oder, wenn sich die Doppelkolbenanordnung 11, 12 in der von dem Einsteckstück 5 abgewandten Endlage befindet, den Durchlass von dem Steckdoseneingang 3 zu dem Einsteckstückabgang 7 öffnet und dabei den Durchlass von dem jeweiligen Steckdoseneingang 3 zu dem Rücklauf 10 verschliesst. Die beiden Kolben 11 und 12 stützen sich gegeneinander über eine Spiralfeder 15 ab, welche über einander zugewandte Ansätze 19 und 20 der Kolben 11 und 12 geschoben ist. Die Doppelkolbenanordnung 11, 12 wird insgesamt normalerweise von einer Spiralfeder 16, die über einen äusseren Ansatz 21 des Kolbens 11 geschoben ist und sich an einem Schliesskörper 29 des Steckdosengehäuses abstützt, in die dem Einsteckstück 5 benachbarte Endlage gedrückt, in welcher sich der Kolben 12 mit seiner Dichtfläche 14 an den schrägen Dichtsitz 26 der Kammer 24 anlegt. In dieser Endlage der Doppelkolbenanordnung 11, 12 ist der Durchfluss von dem Steckdoseneingang 3 zu dem Einsteckstückabgang 7 verschlossen, gleichzeitig aber der Kolben 11 mit seiner Dichtfläche 13 von dem Dichtsitz 25 abgehoben, so dass der Durchfluss von dem Steckdoseneingang 3 über die Verbindungsleitung 8 und die Kammer 24 zu dem gemeinsamen Rücklauf 10 offen ist. Die Dichtfläche 25 ist entsprechend der Darstellung an einem in die einen Teil des Rücklaufes 10, die Kammer 24, einen Teil der Verbindungsleitung 8 in Fortführung der Kammer 24 und eine Ausnehmung 23 im Bereich des Steckdosenausgangs 4 bildende Durchlaufbohrung eingeschraubtes hülsenförmiges Einsatzstück 30 vorgesehen, welches eine Durchbohrung aufweist, in welcher die Feder 16 liegt und in welche der Kolben 11 mit dem Ansatz 21 hineinragt. Das Einsatzstück 30 ist gegenüber dem Querschnitt der Kammer 24 erweitert, so dass die Doppelkolbenanordnung 11, 12 vor dem Einschrauben des Einsatzstückes 30 und dem Einsetzen des Schliesskörpers 29 in der Kammer 24 angeordnet werden kann. Die Doppelkolbenanordnung 11, 12 wird, wie bei den beiden in der Zeichnung unteren Durchgängen dargestellt, von der normalen (rechten) Endlage in die gegenüberliegende Endlage in der Kammer 24 dann gebracht, wenn vor dem Zusammenfügen der Steckdose 2 mit dem Einsteckstück 5, welches im Bereich seiner Eingänge 6 jeweils Hülsen 22 trägt, die mit ihren auswärts weisenden Enden in die entsprechenden Ausnehmungen 23 im Bereich der Steckdosenausgänge 4 eingefügt werden, Auslösestifte 17 in die Verbindungsleitung 8' des Einsteckstükkes 5 eingesetzt sind, die mit einer dem Einsteckstück 5 zugewandten Verlängerung 18 der jeweiligen Kolben 12 zusammenwirken und damit die Doppelkolbenanordnung 11, 12 gegen die Wirkung der Federn 15 und 16 in die (linke) gegenüberliegende Endlage drücken, in welcher der Kolben 11 an der zugehörigen Dichtfläche 25 anliegt und den Durchfluss des Schmiermittels von dem Steckdoseneingang 3 zu dem Rücklauf 10 verschliesst, dafür aber der Kolben 12 mit seiner Dichtfläche 14 von dem zugeordneten Dichtsitz 25 abgehoben ist, so dass der Durchfluss des Schmiermittels von dem Steckdoseneingang 3 zu dem Einsteckstückabgang 7 offen ist. Die Auslösestifte 17 werden jeweils in Anpassung an die Anzahl der Schmierstellen des Anhängers in diejenigen Verbindungsleitungen 8' des Einsteckstückes 5 eingesetzt, bei welchen der Schmiermitteldurchfluss geöffnet sein soll, während bei den nicht mit Schmiermittel zu versorgenden Einsteckstückabgängen 7 das Einsetzen des Auslösestiftes 17 unterbleibt, wie dies bei der in der Zeichnung oberen Durchgangsbohrung veranschaulicht ist. Mit dem Zusammenstecken der Teile der Mehrfachkupplung 1 werden also dann zwangsläufig diejenigen Durchgangsbohrungen geöffnet (und die entsprechenden Rückläufe geschlossen), die mit Schmiermittel versorgt werden sollen. Beim Auseinandernehmen der Teile der Mehrfachkupplung 1 wird die Doppelkolbenanordnung 11, 12 selbsttätig wieder in die (rechte) Verschlussstellung gedrückt, die Steckdose 2 also nach aussen gegen Schmiermittelaustritt verschlossen. Um ein Rückfluss des Schmiermittels aus den Schmiermittelleitungen des Anhängers zu verhindern, ist im Bereich der Einsteckstückabgänge 7 jeweils ein Rückschlagventil 27 angeordnet. Das Koppeln und Entkoppeln der Steckdose 2 mit dem Einsteckstück 5 erfolgt über eine von dem Handgriff 28 aus betätigbare Gewindeverbindung. Die erfindungsgemässe Mehrfachkupplung 1, die in der Zeichnung dargestellt ist, veranschaulicht also beispielsweise aufgrund der Anordnung der beiden Auslösestifte 17 einen Fall, in dem im Anhänger des Lastkraftzuges zwei Schmierstellen oder Schmierstoffverteiler versorgt werden sollen. Ersichtlich kann die Anzahl der eingesetzten Auslösestifte 17 zwischen eins und drei und die Stelle ihrer Anordnung beliebig variiert werden. Auch ist die erfindungsgemässe Mehrfachkupplung 1 nicht auf den Fall von drei Durchlaufbohrungen beschränkt. Es können auch zwei oder mehr als drei Durchlassbohrungen mit entsprechend auswählbarer Öffnung der Schmiermittelzufuhr bzw. Rückführung des Schmiermittels der Versorgungspumpe vorgesehen sein.

**Patentansprüche**

1. Mehrfachkupplung für Schmiersysteme, vorzugsweise in Progressivschmiersystemen an Kraftfahrzeugen, insbesondere Lastkraftzügen mit Anhänger, mit einer Steckdose (2), welche wenigstens zwei mit einer z.B. auf dem Motorwagen des Lastkraftzuges angeordneten Schmiermittelpumpe in Verbindung stehende Eingänge (3) und die gleiche Zahl Ausgänge (4) aufweist, und mit einem Einsteckstück (5), welches mindestens zwei den Steckdosenausgängen (4) entsprechende Eingänge (6) und mindestens zwei den eigenen Eingängen (6) zugeordnete Abgänge (7) zu einer entsprechenden Anzahl von Schmiermittelverteilern, z.B. an dem Lastkraftzuganhänger, aufweist, wobei in der Verbindungsleitung (8, 8') zwischen Steckdoseneingang (3) und Ausgang (4) jeweils eine Ventileinrichtung (9) vorgesehen ist, dadurch gekennzeichnet, dass die Ventileinrichtung (9) wahlweise den Durchfluss des Schmiermittels von dem Steckdoseneingang (3) zu dem Einsteckstückabgang (7) oder zu einem Rücklauf (10) der Steckdose (2) öffnet.

2. Mehrfachkupplung nach Anspruch 1, dadurch gekennzeichnet, dass die Ventileinrichtung (9) eine Doppelkolbenanordnung (11, 12) aufweist, welche in einer ersten Endstellung den Durchfluss vom jeweiligen Steckdoseneingang (3) zum jeweiligen Einsteckstückabgang (7) schliesst und den Durchfluss vom jeweiligen Steckdoseneingang (3) zum Rücklauf (10) öffnet und in der anderen Endstellung umgekehrt den Durchfluss vom jeweiligen Steckdoseneingang (3) zum jeweiligen Einsteckstückabgang (7) öffnet und den Durchfluss vom jeweiligen Steckdoseneingang (3) zum Rücklauf (10) schliesst.

3. Mehrfachkupplung nach Anspruch 2, dadurch gekennzeichnet, dass die Doppelkolbenanordnung (11, 12) zwei sich mittels einer ersten Feder (15) gegeneinander abstützende Kolben (11, 12) mit nach aussen gewandten Dichtflächen (13, 14) hat, welche Kolben (11, 12) gemeinsam von einer zweiten Feder (16) in Richtung der ersten Endstellung gedrückt werden.

4. Mehrfachkupplung nach Anspruch 3, dadurch gekennzeichnet, dass die Doppelkolbenanordnung (11, 12) in einer Kammer (24) angeordnet ist, die an ihren Endflächen die Dichtsitze (25, 26) für die Dichtflächen (13, 14) der Kolben (11, 12) bildet, wobei der Steckdoseneingang (3) über die Verbindungsleitung (8) an die Kammer (24) zwischen den beiden Dichtsitzen (25, 26) angeschlossen ist und wobei von der einen Kammerendfläche die Verbindungsleitung (8, 8') zu dem Einsteckstückabgang (7) und von der anderen Kammerendfläche der Rücklauf (10) abgeht.

5. Mehrfachkupplung nach einem der Ansprüche 3 bis 4, dadurch gekennzeichnet, dass die Doppelkolbenanordnung (11, 12) mittels eines in die Verbindungsleitung (8, 8') einsetzbaren Stiftes (17) beim Zusammenstecken von Steckdose (2) und Einsteckstück (5) gegen den Druck der zweiten Feder (16) von der ersten Endstellung in die zweite Endstellung verschiebbar ist.

6. Mehrfachkupplung nach Anspruch 5, dadurch gekennzeichnet, dass der eine, das Schliessen des Durchflusses von Steckdoseneingang (3) zu Einsteckstückabgang (7) gewährleistende Kolben (12) der Doppelkolbenanordnung (11, 12) mit einer Verlängerung (18), auf welche der Stift (17) einwirken kann, in die Verbindungsleitung (8, 8') hineinragt.

7. Mehrfachkupplung nach Anspruch 6, dadurch gekennzeichnet, dass in die Ausgänge (4) der Steckdose (2) Hülsen (22) eingesetzt sind, welche mit ihren aus der Steckdose (2) herausragenden Enden in die Eingänge (6) des Einsteckstückes (5) passen und als Halterung für die Stifte (17) und als Führung für die Verlängerungen (18) der Kolben (12) dienen.

8. Mehrfachkupplung nach einem der Ansprüche 3 bis 7, dadurch gekennzeichnet, dass die Kolben (11, 12) der Doppelkolbenanordnung (11, 12) jeweils einander zugewandte Ansätze (19, 20) haben, auf welchen die erste Feder (15) sitzt.

9. Mehrfachkupplung nach einem der Ansprüche 3 bis 8, dadurch gekennzeichnet, dass der andere, das Schliessen des Durchflusses von Steckdoseneingang (3) zu Rücklauf (10) gewährleistende Kolben (11) einen äusseren Ansatz (21) trägt, auf welchem die zweite Feder (16) angeordnet ist.

10. Mehrfachkupplung nach einem der Ansprüche 1 bis 9, dadurch gekennzeichnet, dass in den Einsteckstückabgängen (7) Rückschlagventile (27) vorgesehen sind.

**Claims**

1. A multiple-unit coupling for use with lubricating systems, preferably in progressive lubricating systems on motor vehicles, especially truck trains with trailers, comprising a plug connector (2) having at least two inputs (3) in communication with a lubricant pump disposed e.g. on the driving unit of the truck train, and an identical number of outputs (4), and comprising a plug-in element (5) including at least two inputs (6) corresponding to the plug connector outputs (4) and at least two outflows (7) associated to its own inputs (6) and leading to a corresponding number of lubricant distributors, e.g. on the truck train trailer, with respectively one valve arrangement (9) being provided in the connecting line (8, 8') between the plug connector input (3) and output (4), characterized in that the valve arrangement (9) selectively opens the passage of the lubricant from the plug connector input (3) to the plug-in outflow (7) or to a recirculator (10) of the plug connector (2).

2. The multiple unit coupling according to claim 1, characterized in that the valve arrangement (9) comprises a double piston arrangement (11, 12) which in a first end position closes the passage from the respective plug connector input (3) to the respective plug-in outflow (7) and opens the passage from the respective plug connector input (3) to the recirculator (10) and in the other end position, vice versa, opens the passage from the respective plug connector input (3) to the respective plug-in outflow (7) and closes the passage from the respective plug connector input (3) to the recirculator (10).

3. The multiple unit coupling according to claim 2, characterized in that the double piston arrangement (11, 12) includes two pistons (11, 12) supporting one another by means of a first spring (15) and having outwardly directed sealing faces (13, 14), which pistons (11, 12) are jointly urged by a second spring (16) toward said first end position.

4. The multiple unit coupling according to claim 3, characterized in that the double piston arrangement (11, 12) is disposed in a chamber (24) forming at the end faces thereof sealing seats (25, 26) for the sealing faces (13, 14) of pistons (11, 12), with the plug connector input (3) via a connecting line (8) being connected to the chamber (24) between the two sealing seats (25, 26) and with the connecting line (8, 8') leading to the plug-in outflow branching off from said one chamber end face and said recirculator (10) branching off from said other chamber end face.

5. The multiple unit coupling according to any of claims 3 to 4, characterized in that the double piston arrangement (11, 12) by means of a pin (17) insertable into the connecting line (8, 8') during plugging together of the plug connector (2) and plug-in element (5) is displaceable against the thrust of the second spring (16) from said first end position into said second end position.

6. The multiple unit coupling according to claim 5, characterized in that said one piston (12) of said double piston arrangement (11, 12) safeguarding closure of the passage from plug connector input (3) to plug-in outflow (7) with an extension (18) upon which pin (17) can act, protrudes into the connecting line (8, 8').

7. The multiple unit coupling according to claim 6, characterized in that inserted into outputs (4) of plug connector (2) are sleeves (22) which with the ends thereof projecting from the plug connector (2) fit into the inputs (6) of the plug-in element (5) and serve as a support for the pins (17) and as a guide for the extensions (18) of the pistons (12).

8. The multiple unit coupling according to any of claims 3 to 7, characterized in that the pistons (11, 12) of the double piston arrangement (11, 12) include lugs (19, 20) respectively facing one another on which said first spring (15) is seated.

9. The multiple unit coupling according to any of claims 3 to 8, characterized in that said second piston (11) safeguarding closure of the passage from said plug connector input (3) to said recirculator (10) carries an outer lug (21) on which is disposed said second spring (16).

10. The multiple unit coupling according to any of claims 1 to 9, characterized in that non-return valves (27) are provided in the plug-in outflows (7).

## Revendications

1. Dispositif d'accouplement multiple pour des systèmes à graisse, de préférence dans des systèmes à graisse progressifs aux véhicules à moteur, spécialement des trains de camion avec remorque, ayant une boîte de contact (2) munie au moins de deux entrées (3) en communication avec une pompe à graisse montée par exemple sur une voiture motrice du train de camion, et le même nombre de sorties (4), et ayant une unité enfichable (5) munie au moins de deux entrées (6) correspondant aux sorties (4) et au moins de deux issues (7) associées aux entrées (6) propres menant à un nombre correspondant de distributeurs à graisse, par exemple, sur la remorque du train de camion, un ensemble de soupapes (9) étant respectivement pourvu dans la conduite de connexion (8, 8') entre l'entrée de boîte de contact (3) et sortie (4), caractérisé par le fait que l'ensemble de soupapes facultativement ouvre le passage de graisse de l'entrée (3) à l'issue (7) ou à un retour (10) de la boîte de contact (2).

2. Dispositif d'accouplement multiple selon la revendication 1, caractérisé par le fait que l'ensemble de soupapes (9) contienne un ensemble à double piston (11, 12) fermant dans une première position finale le passage de l'entrée (3) respective à l'issue (7) respective et ouvrant le passage de l'entrée (3) au retour (10) et, vice versa, dans l'autre position finale ouvrant le passage de l'entrée (3) respective à l'issue (7) et fermant le passage de l'entrée (3) au retour (10).

3. Dispositif d'accouplement multiple selon la revendication 2, caractérisé par le fait que l'ensemble à double piston (11, 12) contienne deux pistons (11, 12) supportant l'un à l'autre par un ressort premier (15) et ayant deux surfaces de joint (13, 14), pistons (11, 12) étant pressés en commun par un ressort (16) vers la première position finale.

4. Dispositif d'accouplement multiple selon la revendication 3, caractérisé par le fait que l'ensemble à double piston (11, 12) est pourvu dans une chambre (24) formant à ses faces extrêmes les sièges étanches (25, 26) pour les faces jointes (13, 14) des pistons (11, 12), l'entrée (3) par l'intermédiaire de la conduite de connexion (8) étant en communication avec la chambre (24) entre les deux sièges étanches (25, 26) et la conduite de connexion (8, 8') menant à l'issue (7) bifurquant de l'une des surfaces finales de la chambre et le retour (10) bifurquant de l'autre des surfaces finales de chambre.

5. Dispositif d'accouplement multiple selon l'une des revendications 3 à 4, caractérisé par le fait que l'ensemble à double piston (11, 12) par l'intermédiaire d'une broche (17) insérable dans la conduite de connexion (8, 8') au cours d'enfichage de la boîte de contact (2) et de l'unité enfichable (5) est déplaçable contre la pression du second ressort (16) de la première position finale à la seconde position finale.

6. Dispositif d'accouplement multiple selon la revendication 5, caractérisé par le fait que l'un des pistons (12) de l'ensemble à double piston (11, 12) se portant garant de la fermeture du passage de l'entrée (3) à l'issue (7) avec un allongement (18) sur lequel la broche (17) peut agir, se porte en saillie dans la conduite de connexion (8, 8').

7. Dispositif d'accouplement multiple selon la revendication 6, caractérisé par le fait que des manchons (22) sont insérés dans les sorties (4) de la boîte de contact (2) convenant avec leurs extrémités se portant en saillie de la boîte de contact (2) dans les entrées (6) de l'unité enfichable (5) et servant comme appui pour les broches (17) et comme guide pour les allongements (18) des pistons (12).

8. Dispositif d'accouplement multiple selon l'une des revendications 3 à 8, caractérisé par le fait que les pistons (11, 12) de l'ensemble à double piston (11, 12) sont munis des saillies (19, 20) tournées l'une vers l'autre sur lesquelles est fixé le ressort premier (15).

9. Dispositif d'accouplement multiple selon l'une des revendications 3 à 8, caractérisé par le fait que l'autre des pistons (11) se portant garant de fermer le passage de l'entrée (3) au retour (10) porte une saillie (21) extérieure sur laquelle est prévu le ressort (16) secondaire.

10. Dispositif d'accouplement multiple selon l'une des revendications 1 à 9, caractérisé par le fait que des soupapes de retenue (27) sont pourvues dans les issues de l'unité enfichable.